# EUROPEAN PATENT APPLICATION

(11) **EP 0 778 053 A2**
(43) Date of publication of application: **11.06.1997**
(21) Application number: 96119004.8
(22) Date of filing: 27.11.1996
(51) Int. Cl.: A63C 5/03

(54) **Snowboard**

(30) Priority: 05.12.1995 JP 347472/95; 05.12.1995 JP 347473/95
(71) Applicant: Shimizu, Hajime, Yokohama-shi, Kanagawa (JP); Kaneko, Yoshiaki, Yokohama-shi, Kanagawa (JP)
(72) Inventor: Shimizu, Hajime, Yokohama-shi, Kanagawa (JP); Kaneko, Yoshiaki, Yokohama-shi, Kanagawa (JP)
(74) Representative: Herzog, Markus, Dipl.-Phys. Dr.

(57) **Abstract**

A snowboard having a transversely convex bottom surface and transversely projecting edges formed one at each side thereof is featured in that it allows a rider to easily incline the board sideways to cut one side edge into the snow in turning or traversing and it has a high slidability for schussing with a minimized side-slippage.

## Description

### BACKGROUND OF THE INVENTION

The present invention relates to a snowboard that allows a rider to easily do edging in turning and traversing and smooth accelerate without side slipping while gliding straight over a snow slope.

Conventional flat-bottom snowboards have following drawbacks:
First, a user using a flat-bottom snowboard is required to get skill of edging by moving his or her body weight thereon so as to cut one edge of the board into the snow when turning and traversing down a slope. In gliding straight down a slop, the user must keep the snowboard being inclined to one side so as to avoid side-slipping due to poor slidability of its flat-bottom surface.
Second, it is rather difficult for a rider to keep his or her balance on a snowboard while gliding over a rolling (uneven) slope since the rider is standing on his or her own feet with shoes bound to a shoe-holders on a top surface of the snowboard. In addition, nothing to grasp by hand gives much inconvenience to the user when binding or unbinding shoes to or from the shoe-holders on the snowboard. It is also a problem that the snowboard can not release the shoes when the rider falls down.

### SUMMARY OF THE INVENTION

In view of the foregoing, it is an object of the present invention to provide a snowboard having a transversely convex bottom surface with projecting side edges formed one at each side thereof, which is, therefore, easy to do edging in turning and traversing and has an excellent slidability with no side-slip while gliding straight down a snow slope.

Another object of the present invention is to provide a snowboard which has a handle formed on the top surface to allow a rider to easily balance own body thereon by grasping the handle while gliding over the snow.

Another object of the present invention is to provide a snowboard whose top surface has a high frictional resistance enough to allow a rider to freely stand on own feet without binding shoes to the top board surface.

### BRIEF DESCRIPTION OF THE DRAWINGS

Fig. 1 is a plan view of a snowboard embodying the present invention.

Fig. 2 is a front view of the snowboard shown in Fig. 1.

Fig. 3 is a sectional view taken on line A-A of Fig. 1.

Fig. 4 is a sectional view taken on line B-B of Fig. 1.

Fig. 5 is a sectional view taken on line C-C of Fig. 1.

Fig. 6 is a plan view of another snowboard embodying the present invention.

Fig. 7 is a front view of the snowboard shown in Fig. 6.

Fig. 8 is a side view of the snowboard shown in Fig. 6.

Fig. 9 is a front view of a fixing portion of a handle of the snowboard shown in Fig. 6.

Fig. 10 is a plan view of a fixing portion of a handle of the snowboard shown in Fig. 6.

Fig. 11 is a side view of an exemplified click mechanism provided between a holding portion and a body portion of a handle of the snowboard shown in Fig. 6.

Fig. 12 is a single-hand grip portion of a handle of the snowboard shown in Fig. 6.

### DESCRIPTION OF THE PREFERRED EMBODIMENTS

The preferred embodiments of the present invention will now be described in detail by way of example and with reference to the accompanying drawings.

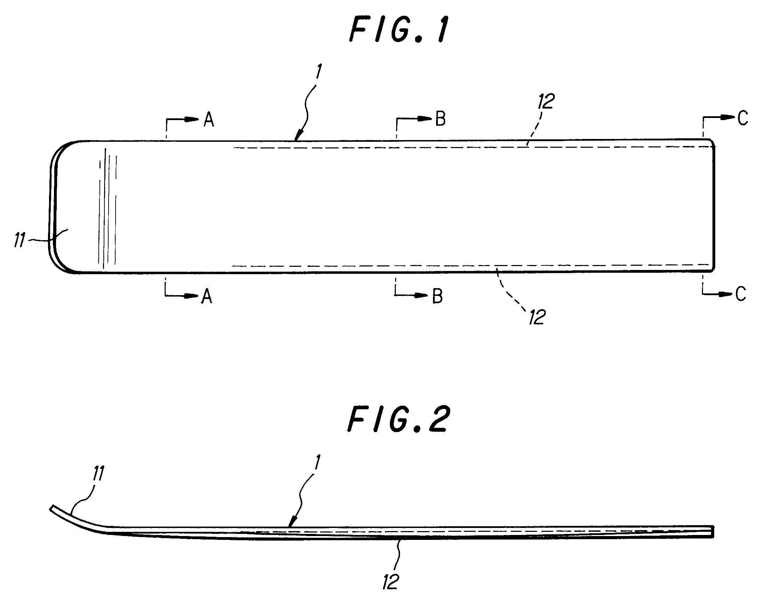

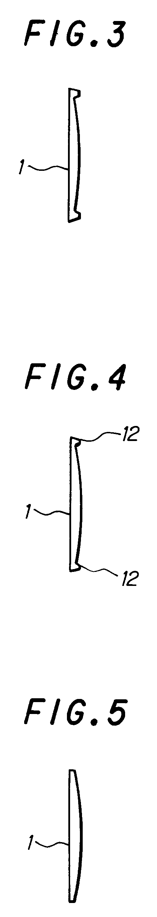

As shown in Figs. 1 through 5, a snowboard according to the present invention has a board 1 whose front portion 11 curves upwards and whose bottom, excepting the front curve portion 11, has a transversely convex surface with projecting edges 12 formed at both sides being a large portion of the sliding bottom surface.

In comparison with a snowboard having a flat bottom surface, the snowboard whose board 1 has transversely convex bottom surface with the projecting side edges 12 has excellent slidability and linear advancing ability, thereby effectively preventing unexpected side slippage of the board.

The snowboard allows a rider to easily incline the board- sideways by slightly moving his or her body weight thereon to cut one of the board edges 12 into snow. This feature increases the steerability of the snowboard.

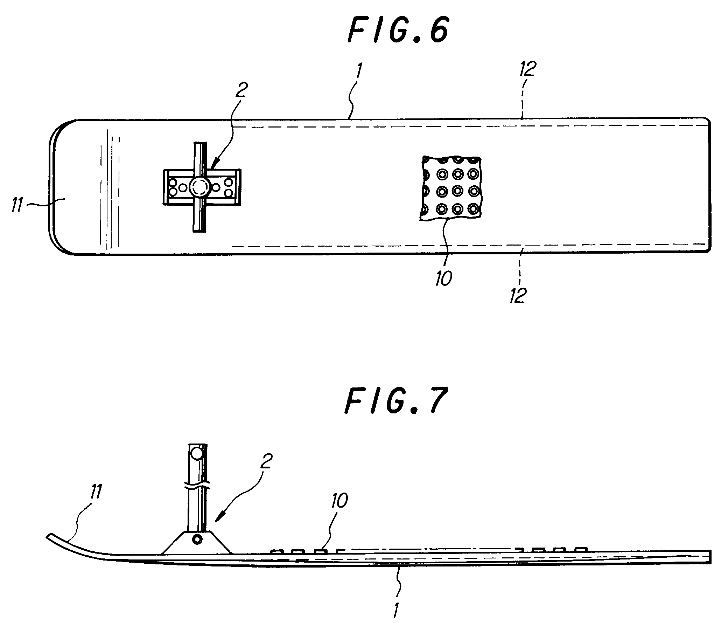

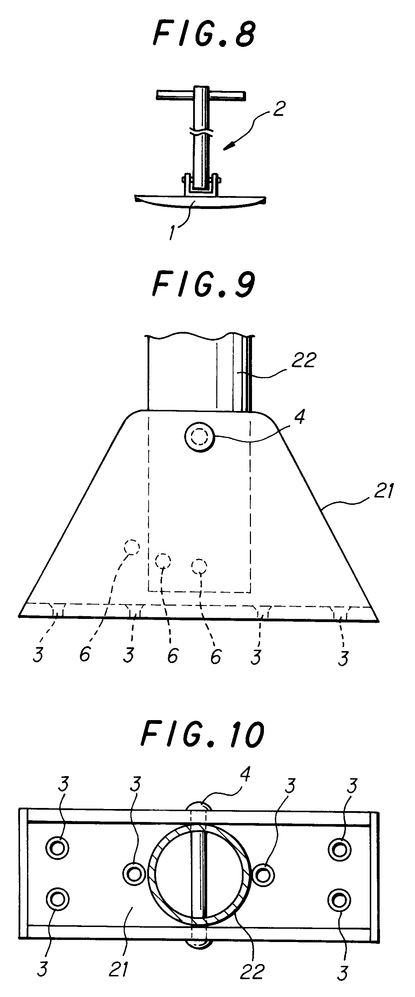

Figs. 6 to 8 shows another embodiment of the present invention. A shown snowboard has a board 1 with a handle 2 attached to the top surface thereof. As shown further in Figs. 9 and 10, the handle 2 is composed of a holding portion 21 secured to the board 1 with a plurality of screws 3 and a lever-like handle body 22 turnably mounted on a pivot pin 4 secured on the holding portion 21 so that the handle can swing forwards and backwards.

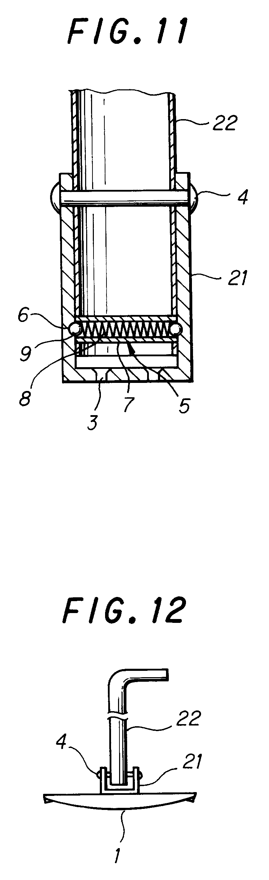

As shown in Fig. 11, a click (spring loaded locking) mechanism 5 is disposed under the pivot pin 4 between the holding portion 21 and the handle body 22. The click mechanism 5 is used for positioning the handle body relative to the holding portion 21 and locks the handle body 22 thereat. When the handle body 22 is loaded with a force exceeding a preset value, it is released from the click mechanism 5 and turns forwards or backwards on the pivot pin 4.

A plurality of bores 6 being selectively usable for mounting balls for the click mechanism 5 are made at corresponding places in both side-walls of the holding portion 21. Two clicking balls 9 with an interposed therebetween spring 8 are mounted one in each end of a pipe 7 secured to a lower portion of the handle body 22. The balls 9 fit in corresponding paired bores 6 respectively.

The bores 6 made at specified intervals as shown in Fig. 9 can be selectively used for stepwise positioning the handle body 22 in a tilted state.

A grip portion of the handle body 22 can be made of single-hand type shown in Fig. 8 or two-hand type shown in Fig. 12, which are selectively used.

While a user rides on the board 1 over the snow, he or she can easily balance own body thereon by holding the grip portion of the handle 2 and can easily steer the board 1 owing to its convex bottom surface with the projecting edges.

When the handle body 22 is loaded with a force exceeding a specified value, which is caused, for example, from falling-down of a rider, it can be released from the click lock and falls down forwards or backwards, that effectively prevents the rider from being bruised by the handle body 22.

The top surface of the board 1 is made to have a large frictional resistance, for example, by bonding a rubber sheet 10 having an uneven upper surface to a footing area of the top surface of the board 1, where a rider stands on his or her feet.

The board 1 having a top surface with a high frictional resistance allows the rider to freely ride thereon without binding his or her shoes thereto. Namely, the rider can ride on the board 1, holding the handle 2 for balancing own body thereon, and can freely take a suitable pose thereon according to varying gliding conditions.

As described above, the snowboard according to the present invention has a transversely convex bottom surface of its board with transversely projecting edges formed at both sides thereof and can, therefore, allow a user to easily cut one of the board side edges into snow when turning or traversing the board down a slope, and can glide the board at a high speed when gliding straight over the snow without undesirable side slippage.

The snowboard according to the present invention has a handle provided at the top surface thereof, which allows a rider to easily get balance of his or her body thereon by holding the handle when riding on the board over the snow.

The snowboard according to the present invention has a board whose top surface has an increased frictional resistance allowing a rider to freely stand thereon without binding his or her shoes thereto and further to take a suitable balancing pose and position on the board as the gliding condition varies.

## Claims

1. A snowboard comprising a board having a transversely convex bottom surface with transversely projecting edges formed at both sides of the board.

2. A snowboard as defined in claim 1, characterized by providing a handle on a top surface of the board.

3. A snowboard as defined in claim 2, characterized in that the handle is secured to the top surface of the board by using a click mechanism which can release the handle to tilt down when a force exceeding a specified value is applied to the handle.

4. A snowboard as defined in any one of claims 1 to 3, characterized in that the top surface of the board has a large frictional resistance.
